# EUROPEAN PATENT APPLICATION

(11) **EP 4 712 359 A1**
(43) Date of publication of application: **18.03.2026**
(21) Application number: 24856618.4
(22) Date of filing: 19.06.2024
(51) Int. Cl.: H04B 7/06, H04B 7/08, H04B 1/04, H04B 1/18, H04B 17/318

(54) **ELECTRONIC DEVICE FOR CHANGING TRANSMITTING ANTENNA AND OPERATION METHOD THEREOF**

(30) Priority: 22.08.2023 KR 20230109803; 13.09.2023 KR 20230122022
(71) Applicant: Samsung Electronics Co., Ltd., Suwon-si, Gyeonggi-do 16677 (KR)
(72) Inventor: KIM, Taekyun, Suwon-si Gyeonggi-do 16677 (KR); BAE, Taejoon, Suwon-si Gyeonggi-do 16677 (KR); AHN, Sungchan, Suwon-si Gyeonggi-do 16677 (KR); CHAE, Kyumin, Suwon-si Gyeonggi-do 16677 (KR)
(74) Representative: Gulde & Partner
(86) International application number: PCT/KR2024/008450
(87) International publication number: WO 2025/042002

(57) **Abstract**

An electronic device is disclosed. The electronic device comprises: a first antenna; a second antenna; a memory for storing one or more computer programs; and one or more processors communicatively connected to the first antenna, the second antenna, and the memory, wherein the one or more computer programs may comprise computer executable instructions that, when executed by the one or more processors, instruct the electronic device to: determine whether the first antenna operates with a transmission code among antenna impedance tuning (AIT) codes; determine whether a first condition for reception quality of the first antenna and the second antenna is satisfied when the first antenna operates with the transmission code; determine whether a second condition for the reception quality of the first antenna and the second antenna is satisfied when the first antenna operates with a code different from the transmission code among the AIT codes; and control the second antenna to operate as a main transmission antenna when the first condition and the second condition are satisfied.

## Description

### BACKGROUND

### 1. Field

The disclosure relates to an electronic device for switching transmission antennas and an operating method thereof.

### 2. Description of Related Art

With the development of wireless communication technology, electronic devices (e.g., electronic devices for communications) are commonly used in daily life, leading to an exponential increase in the use of content. Due to the rapid increase in the use of content, network capacity is gradually reaching its limit, and after the commercialization of a 4th generation (4G) communication system, communication systems (e.g., a 5th generation (5G) communication system, a pre-5G communication system, or a new radio (NR) communication system) that transmit and/or receive a signal using frequencies in the high frequency (e.g., millimeter wave (mmWave)) band (e.g., 3 gigahertz (GHz) to 300 GHz band) are being studied to meet the increasing demand for wireless data traffic. The above description is information the inventor(s) acquired during the course of conceiving the disclosure, or already possessed at the time, and is not necessarily art publicly known before the application was filed.

The above information is presented as background information only to assist with an understanding of the disclosure. No determination has been made, and no assertion is made, as to whether any of the above might be applicable as prior art with regard to the disclosure.

### SUMMARY

Aspects of the disclosure are to address at least the above-mentioned problems and/or disadvantages and to provide at least the advantages described below. Accordingly, an aspect of the disclosure is to provide an electronic device for switching transmission antennas and an operating method thereof.

Additional aspects will be set forth in part in the description which follows and, in part, will be apparent from the description, or may be learned by practice of the presented embodiments.

In accordance with an aspect of the disclosure, an electronic device is provided. The electronic device includes a first antenna, a second antenna, memory storing one or more computer programs, and one or more processors communicatively coupled to the first antenna, the second antenna, and the memory. The one or more computer programs include computer-executable instructions that, when executed by the one or more processors, cause the electronic device to determine whether the first antenna operates with transmission (TX) code in antenna impedance tuning (AIT) code. The one or more computer programs include computer-executable instructions that, when executed by the one or more processors, cause the electronic device to determine whether a first condition for reception quality of the first antenna and the second antenna is satisfied when the first antenna operates with the TX code. The one or more computer programs include computer-executable instructions that, when executed by the one or more processors, cause the electronic device to determine whether a second condition for the reception quality of the first antenna and the second antenna is satisfied when the first antenna operates with other code that is different from the TX code in the AIT code. The one or more computer programs include computer-executable instructions that, when executed by the one or more processors, cause the electronic device to control the second antenna to operate as a main transmission antenna when both the first condition and the second condition are satisfied.

In accordance with another aspect of the disclosure, an electronic device is provided. The electronic device includes a first antenna, a second antenna, memory storing one or more computer programs, and one or more processors communicatively coupled to the first antenna, the second antenna, and the memory. The one or more computer programs include computer-executable instructions that, when executed by the one or more processors, cause the electronic device to determine whether the first antenna operates with transmission (TX) code in antenna impedance tuning (AIT) code. The one or more computer programs include computer-executable instructions that, when executed by the one or more processors, cause the electronic device to determine whether a first reference signal received power (RSRP) delta value for the first antenna and the second antenna exceeds a threshold value when the first antenna operates with the TX code. The one or more computer programs include computer-executable instructions that, when executed by the one or more processors, cause the electronic device to control the first antenna to operate with other code that is different from the TX code in the AIT code when the first RSRP delta value exceeds the threshold value. The one or more computer programs include computer-executable instructions that, when executed by the one or more processors, cause the electronic device to control the second antenna to operate as a main transmission antenna based on whether a second RSRP delta value for the first antenna and the second antenna exceeds the threshold value when the first antenna operates with the other code.

In accordance with another aspect of the disclosure, an operating method performed by an electronic device is provided. The operating method includes determining, by the electronic device, whether a first antenna operates with transmission (TX) code in antenna impedance tuning (AIT) code. The operating method includes determining, by the electronic device, whether a first condition for reception quality of the first antenna and a second antenna is satisfied while the first antenna operates with the TX code. The operating method includes determining, by the electronic device, whether a second condition for the reception quality of the first antenna and the second antenna is satisfied while the first antenna operates with other code. The operating method includes controlling, by the electronic device, the second antenna to operate as a main transmission antenna while both the first condition and the second condition are satisfied.

In accordance with another aspect of the disclosure, an operating method performed by an electronic device is provided. The operating method includes determining, by the electronic device, whether a first antenna operates with transmission (TX) code in antenna impedance tuning (AIT) code. The operating method includes determining, by the electronic device, whether a first reference signal received power (RSRP) delta value for the first antenna and the a second antenna exceeds a threshold value while the first antenna operates with the TX code. The operating method includes controlling, by the electronic device, the first antenna to operate with other code that is different from the TX code in the AIT code while the first RSRP delta value exceeds the threshold value. The operating method includes controlling, by the electronic device, the second antenna to operate as a main transmission antenna based on whether a second RSRP delta value for the first antenna and the second antenna exceeds the threshold value while the first antenna operates with the other code.

In accordance with another aspect of the disclosure, one or more non-transitory computer-readable storage media storing one or more computer programs including computer-executable instructions that, when executed by one or more processors of an electronic device individually or collectively, cause the electronic device to perform operations are provided. The operations include determining, by the electronic device, whether a first antenna operates with transmission (TX) code in antenna impedance tuning (AIT) code. The operations include determining, by the electronic device, whether a first condition for reception quality of the first antenna and a second antenna is satisfied while the first antenna operates with the TX code. The operations include determining, by the electronic device, whether a second condition for the reception quality of the first antenna and the second antenna is satisfied while the first antenna operates with other code. The operations include controlling, by the electronic device, the second antenna to operate as a main transmission antenna when both the first condition and the second condition are satisfied.

In accordance with another aspect of the disclosure, one or more non-transitory computer-readable storage media storing one or more computer programs including computer-executable instructions that, when executed by one or more processors of an electronic device individually or collectively, cause the electronic device to perform operations are provided. The operations include determining, by the electronic device, whether a first antenna operates with transmission (TX) code in antenna impedance tuning (AIT) code. The operations include determining, by the electronic device, whether a first reference signal received power (RSRP) delta value for the first antenna and a second antenna exceeds a threshold value while the first antenna operates with the TX code. The operations include controlling, by the electronic device, the first antenna to operate with other code that is different from the TX code in the AIT code while the first RSRP delta value exceeds the threshold value. The operations include controlling, by the electronic device, the second antenna to operate as a main transmission antenna based on whether a second RSRP delta value for the first antenna and the second antenna exceeds the threshold value while the first antenna operates with the other code.

Other aspects, advantages, and salient features of the disclosure will become apparent to those skilled in the art from the following detailed description, which, taken in conjunction with the annexed drawings, discloses various embodiments of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a block diagram illustrating an electronic device in a network environment, according to an embodiment of the disclosure;
FIG. 2 is a diagram illustrating an electronic device including antennas, according to an embodiment of the disclosure;
FIG. 3 is a flowchart illustrating a process of determining which of pieces of antenna impedance tuning (AIT) code an antenna operates with, using a signal-to-noise ratio (SNR) condition according to an embodiment of the disclosure;
FIG. 4 is a diagram illustrating cases that may occur according to antenna switching and an SNR condition, according to an embodiment of the disclosure;
FIG. 5 is a diagram illustrating a switching log of a main transmission antenna according to antenna switching and an SNR condition, according to an embodiment of the disclosure;
FIG. 6 is a flowchart illustrating a method of switching antennas of an electronic device, according to an embodiment of the disclosure;
FIG. 7 is a diagram illustrating a switching log of a main transmission antenna, according to an embodiment of the disclosure;
FIG. 8 is a flowchart illustrating an operating method of an electronic device according to an embodiment of the disclosure; and
FIG. 9 is a flowchart illustrating an operating method of an electronic device according to an embodiment of the disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an integrated circuit (IC), or the like.

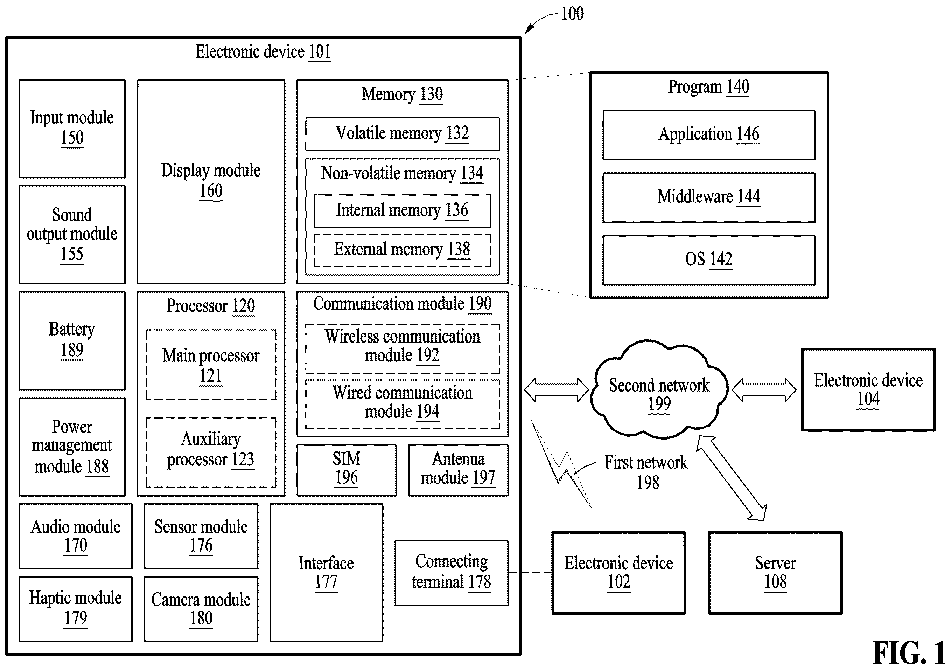

FIG. 1 is a block diagram illustrating an electronic device in a network environment, according to an embodiment of the disclosure.

Referring to FIG. 1, an electronic device 101 in a network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to one embodiment, the electronic device 101 may communicate with the electronic device 104 via the server 108. According to an embodiment, the electronic device 101 may include a processor 120, memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for processing of an artificial intelligence (AI) model. An artificial intelligence model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, or the projector. According to an embodiment, the display module 160 may include a touch sensor adapted to detect a touch, or a pressure sensor adapted to measure the intensity of force incurred by the touch.

The audio module 170 may convert a sound into an electric signal or vice versa. According to an embodiment, the audio module 170 may obtain the sound via the input module 150, or output the sound via the sound output module 155 or an external electronic device (e.g., the electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, image signal processors, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1 ms or less) for implementing URLLC.

The antenna module 197 may transmit or receive a signal or power to or from the outside (e.g., an external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least portion of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. As used herein, "A or B", "at least one of A and B", "at least one of A or B", "A, B or C", "at least one of A, B and C", and "A, B, or C," may include any one of the items listed together in the corresponding one of the phrases, or all possible combinations thereof. Terms such as "1st", "2nd", or "first" or "second" may simply be used to distinguish the component from other components in question, and do not limit the components in other aspects (e.g., importance or order). It is to be understood that if a component (e.g., a first component) is referred to, with or without the term "operatively" or "communicatively," as "coupled with," "coupled to," "connected with," or "connected to" another component (e.g., a second component), the component may be coupled with the other component directly (e.g., by wire), wirelessly, or via a third component.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least portion of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

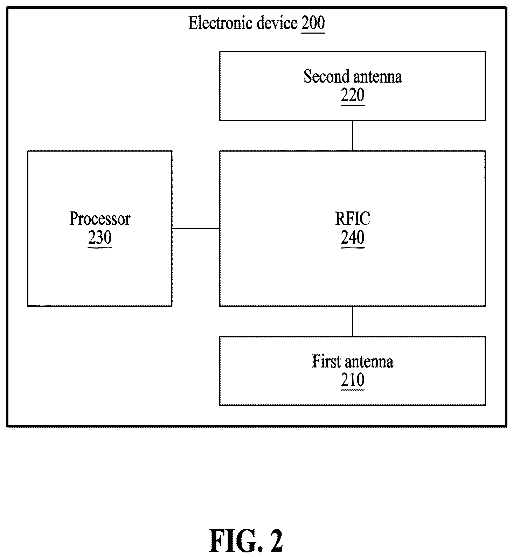

FIG. 2 is a diagram illustrating an electronic device including antennas, according to an embodiment of the disclosure.

Referring to FIG. 2, an electronic device 200 (e.g., the electronic device 101 of FIG. 1) may include a first antenna 210, a second antenna 220, at least one processor 230 (e.g., the processor 120 of FIG. 1), and an RFIC 240. In the example of FIG. 2, only the components related to the embodiments described herein are illustrated as being included in the electronic device 200. Thus, the electronic device 200 may also include other general-purpose components in addition to the components illustrated in FIG. 2.

The electronic device 200 may support mid-band (MB) (e.g., a long timer evolution (LTE) anchor)-MB (e.g., NR) E-UTRAN new radio dual connectivity (ENDC) using the first antenna 210 and the second antenna 220. The electronic device 200 may support MB (e.g., an LTE anchor)-high-band (HB) ENDC using the first antenna 210 and the second antenna 220. However, network communication that the first antenna 210 and the second antenna 220 may support is not limited to the above-described examples. For example, the electronic device 200 may support an existing communication method in addition to 5G communication. The electronic device 200 may support existing communication methods such as LTE, 3rd generation (3G), and/or 2nd generation (2G).

To support communication in various radio frequency (RF) bands of the electronic device 200, the first antenna 210 and the second antenna 220 may be disposed in the lower area and the upper area, respectively, as shown in FIG. 2. However, the disposition of the first antenna 210 and the second antenna 220 described above is only an example and not limited thereto.

The electronic device 200 may include at least one processor 230. The at least one processor 230 may be connected to the RFIC 240. The at least one processor 230 may generate processing instructions for a signal transmitted or received to or from the first antenna 210 and/or the second antenna 220. The RFIC 240 may process the signal transmitted or received to or from the first antenna 210 and/or the second antenna 220 according to the processing instructions. The at least one processor 230 may generate control instructions that control switching of the first antenna 210 and/or the second antenna 220. The RFIC 240 may perform switching on the first antenna 210 and/or the second antenna 220 according to the control instructions. According to an embodiment, the at least one processor 230 may be a communication processor (e.g., the auxiliary processor 123 of FIG. 1).

The electronic device 200 may include a power amplifier (PA) for the first antenna 210 and a PA for the second antenna 220 to support the various network communications (e.g., MB-HB ENDC) described above. The electronic device 200 may include two antennas capable of transmitting a signal by including the PAs for each of the first antenna 210 and the second antenna 220.

Accordingly, the electronic device 200 may determine one of the first antenna 210 and the second antenna 220 to be a main transmission antenna. Except for one determined to be the main transmission antenna, the electronic device 200 may determine the other of the first antenna 210 and the second antenna 220 to be a main reception antenna. Even when an antenna is determined to be the main transmission antenna, the antenna may not only perform transmission but also reception. That is, the antenna determined to be the main transmission antenna may be both the main transmission antenna and a sub-reception antenna. For example, when the first antenna 210 is determined to be the main transmission antenna, the first antenna 210 may operate as the sub-reception antenna while operating as the main transmission antenna.

Likewise, an antenna may not only perform transmission but also reception even when the antenna is determined to be the main reception antenna. That is, an antenna determined to be the main reception antenna may be both the main reception antenna and a sub-transmission antenna. For example, when the second antenna 220 is determined to be the main reception antenna, the second antenna 220 may operate as the sub-transmission antenna while operating as the main reception antenna.

Reception quality of the electronic device 200 may decrease for various reasons. For example, the reception quality may decrease according to a method in which the electronic device 200 is gripped by a user. Accordingly, when the reception quality decreases, the electronic device 200 may need to switch the main transmission antenna. For example, the electronic device 200 may need to switch the main transmission antenna from the first antenna 210 to the second antenna 220. Accordingly, a method of switching the main transmission antenna may be required.

Related technology may switch the main transmission antenna depending on whether the difference in reference signal received power (RSRP) values between the first antenna 210 and the second antenna 220 exceeds a threshold value. The difference in RSRP values may be a value obtained by subtracting an RSRP value of the main transmission antenna from an RSRP value of the main reception antenna.

Hereinafter, antenna impedance tuning (AIT) code in which an antenna operates according to an SNR condition is described.

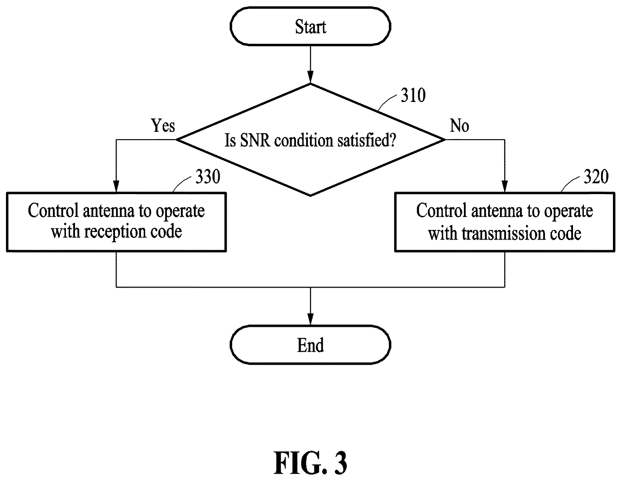

FIG. 3 is a flowchart illustrating a process of determining which of pieces of AIT code an antenna operates with, using an SNR condition according to an embodiment of the disclosure.

An antenna (e.g., the first antenna 210 and the second antenna 220 of FIG. 2) may be connected to a tuner that adjusts the impedance of the antenna. The tuner may include a plurality of capacitors and a plurality of switches. The plurality of capacitors and the plurality of switches may be controlled based on the AIT code. Based on the AIT code, the impedance of the antenna may be adjusted through charging and discharging of the plurality of capacitors and switching of the plurality of switches. The impedance of each of antennas included in an electronic device (e.g., the electronic device 101 of FIG. 1 and the electronic device 200 of FIG. 2) may be adjusted based on the same or different pieces of AIT code.

The antenna may transmit and receive a signal at the same time. The antenna may transmit and receive a signal in different frequency bands. For example, the antenna may transmit a signal in the 1,700 megahertz (MHz) band and may receive a signal in the 2,100 MHz band.

Since the antenna transmits and receives a signal in different frequency bands, different pieces of AIT code may need to be used for the transmission and the reception. Accordingly, the pieces of AIT code may include transmission (TX) code and reception (RX) code. The TX code may control the transmission performance of the antenna by controlling the impedance of the antenna. The RX code may control the reception performance of the antenna by controlling the impedance of the antenna.

Hereinafter, a method of determining the AIT code in which an antenna of related technology is to operate is described.

In the following embodiments, operations may be performed sequentially but not necessarily. For example, the order of the operations may be changed and at least two of the operations may be performed in parallel. The operations shown in FIG. 3 may be performed by at least one component of an electronic device.

In operation 310, the electronic device may determine whether an antenna satisfies an SNR condition. The SNR condition may be whether an SNR value of the antenna exceeds a threshold value.

In operation 320, the electronic device may control the antenna to operate with the TX code when the antenna does not satisfy the SNR condition.

In operation 330, the electronic device may control the antenna to operate with the RX code when the antenna satisfies the SNR condition.

However, a method of determining the AIT code in which the antenna is to operate is not limited to the SNR condition described above.

As described above with reference to FIGS. 2 and 3, since the switching of the main antenna and the determination of the AIT code each follow different references, the antenna may operate in four cases. Hereinafter, four cases of operation according to different references are described.

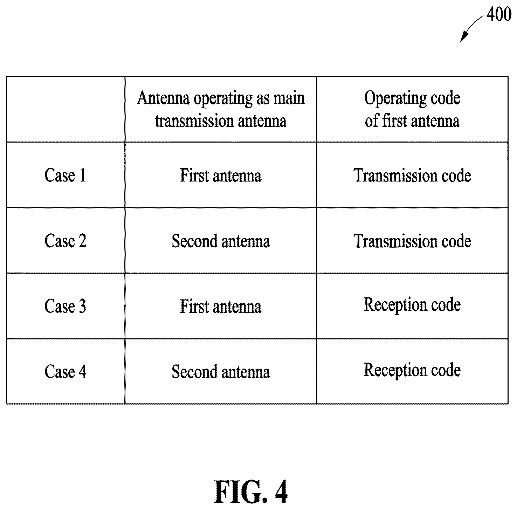

FIG. 4 is a diagram illustrating cases that may occur according to antenna switching and an SNR condition, according to an embodiment of the disclosure.

Whether an antenna operates as a main transmission antenna or a main reception antenna and which of pieces of AIT code the antenna operates with may be independent from each other. That is, the antenna may operate as TX code or RX code while operating as the main transmission antenna.

FIG. 4 illustrates a table showing cases that may occur according to the antenna switching and the SNR condition.

Hereinafter, for ease of description, description is provided based on a first antenna (e.g., the first antenna 210 of FIG. 2). However, the following description may apply to an antenna other than the first antenna.

Referring to FIG. 4, table 400 shows that, in case 1, the first antenna may operate as the main transmission antenna and with the TX code. An RSRP value may be a measure of reception quality. When the first antenna operates with the TX code, the first antenna may prioritize the transmission performance over the reception performance. Accordingly, even though the performance of the first antenna does not actually decrease, an RSRP value when the first antenna operates with the TX code may be measured to be less than an RSRP value when the first antenna operates with the RX code.

For example, when the first antenna operates with the TX code, the first antenna may prioritize the transmission performance, so the RSRP value of the first antenna may decrease by 3 decibels (dB) compared to the actual performance of the first antenna. That is, when the first antenna operates with the TX code, the RSRP value of the first antenna may already be reduced by 3 dB. That is, additional deviation may occur. For example, assuming that a threshold value of an RSRP delta value for switching the main transmission antenna to a second antenna (e.g., the second antenna 220 of FIG. 2) is 8 dB, due to the additional deviation, switching of the main transmission antenna may occur even when the RSRP value of the first antenna decreases by only 5 dB. Accordingly, switching of the main transmission antenna from the first antenna to the second antenna may occur even though there is no gain.

In case 2, the second antenna may operate as the main transmission antenna and with the TX code. That is, case 2 may be a case in which the main transmission antenna is switched from the first antenna to the second antenna in case 1. As described above with reference to case 1, when the first antenna operates with the TX code, the RSRP value of the first antenna may decrease compared to the actual performance of the first antenna.

For example, when the first antenna operates with the TX code, the RSRP value may decrease by 3 dB compared to the actual performance of the first antenna. Accordingly, even when the second antenna operates as the main transmission antenna, the second antenna may continue operating as the main transmission antenna even though there is no gain.

In conclusion, the performance may decrease in case 1 and case 2 compared to when the main transmission antenna is fixed as the first antenna. When the first antenna operates with the TX code, there may be a problem in that the main transmission antenna is switched or is maintained as the second antenna even though there is no gain due to the deterioration of reception quality (i.e., the RSRP value) compared to the actual performance of the first antenna.

Case 3 and case 4 may be cases in which the first antenna operates with the RX code. In case 3 and case 4, since the first antenna operates with the RX code, the RSRP value of the first antenna may not decrease. In case 3 and case 4, the first antenna operates with the RX code and the actual RSRP value of the first antenna may be measured. Accordingly, in case 3 and case 4, the problem according to case 1 and case 2 may not occur.

Hereinafter, a switching log of the main transmission antenna that may occur due to the cases described above is described.

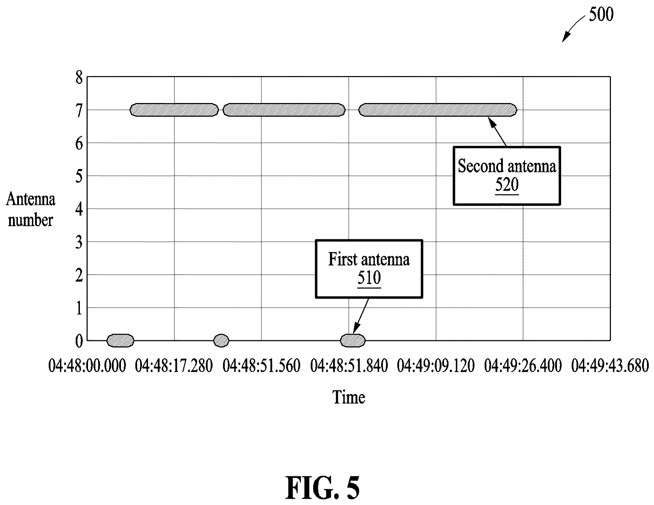

FIG. 5 is a diagram illustrating a switching log of a main transmission antenna according to antenna switching and an SNR condition, according to an embodiment of the disclosure.

FIG. 5 illustrates a table showing a switching log of a main transmission antenna.

Referring to FIG. 5, table 500 shows that antenna number 0 may be a first antenna 510 (e.g., the first antenna 210 of FIG. 2). In the table 500, antenna number 7 may be a second antenna 520 (e.g., the second antenna 220 of FIG. 2). Referring to the table 500, most of the occupancy of the main transmission antenna may be the second antenna 520. As shown in case 1 of FIG. 4, this may be because the main transmission antenna is switched to the second antenna 520 even though there is no gain. As shown in case 2 of FIG. 4, this may be because the second antenna 520 continues operating as the main transmission antenna even though there is no gain.

Hereinafter, assuming that the first antenna 510 is a bottom antenna and the second antenna 520 is a top antenna, Table 1 describes the deterioration of reception quality due to antenna switching.

**Table 1**

| Main Transmission Antenna | Mode | B3 | | | B1 | | | B7 | | |
|---|---|---|---|---|---|---|---|---|---|---|
| | | TX 1710-1785 | | | TX 1920-1980 | | | TX 2500-2570 | | |
| | | RX 1805-1880 | | | RX 2110-2175 | | | RX 2620-2690 | | |
| | | LOW | MID | HIGH | LOW | MID | HIGH | LOW | MID | HIGH |
| Fixed at Bottom | TRP | 19.78 | 19.43 | 19.05 | 18.77 | 18.98 | 18.7 | 17.49 | 18.91 | 19.52 |
| Fixed at Top | TRP | 17.98 | 17.66 | 17.73 | 16.38 | 16.17 | 15.27 | 17.78 | 18.33 | 17.35 |
| Antenna Switching | TRP | 19.89 | 19.49 | 18.74 | 18.78 | 18.96 | 16.28 | 17.34 | 18.85 | 19.46 |

Table 1 shows RSRP values in LOW, MID, and HIGH bands of each of a case (hereinafter, referred to as case A) of fixing the main transmission antenna at the bottom, a case of fixing the main transmission antenna at the top, and a case (hereinafter, referred to as case B) of switching the main transmission antenna. Here, it may be assumed that case B is a case in which the main transmission antenna is switched from the bottom antenna to the top antenna. Accordingly, case A may be compared with case B.

In case A, an RSRP value in the HIGH band of the B3 band may be 19.05, and in case B, an RSRP value in the HIGH band of the B3 band may be 18.74. Here, an RSRP delta value may be 0.31. In case A, an RSRP value in the HIGH band of the B7 band may be 19.52, and in case B, an RSRP value in the HIGH band of the B7 band may be 19.46. Here, an RSRP delta value may be 0.06. In the B3 band and the B7 band, the RSRP delta values may be only 0.31 and 0.06, respectively, and it may be determined that there is no problem with the antenna performance.

In contrast, in case A, an RSRP value in the HIGH band of the B1 band may be 18.7, and in case B, an RSRP value in the HIGH band of the B1 band may be 16.28. Here, an RSRP delta value may be 2.42. An RSRP delta value in the HIGH band of the B1 band may be relatively greater than that of the B3 band and the B7 band. Compared to the B3 band and the B7 band, even though there is no problem with the antenna performance, the deterioration of reception quality may occur in the HIGH band of the B1 band. Accordingly, even though there is no problem with the antenna performance, the main transmission antenna may be unnecessarily switched, so power loss may occur.

Hereinafter, a method of applying an additional condition to improve the problems according to case 1 and case 2 described above with reference to FIG. 4 is described.

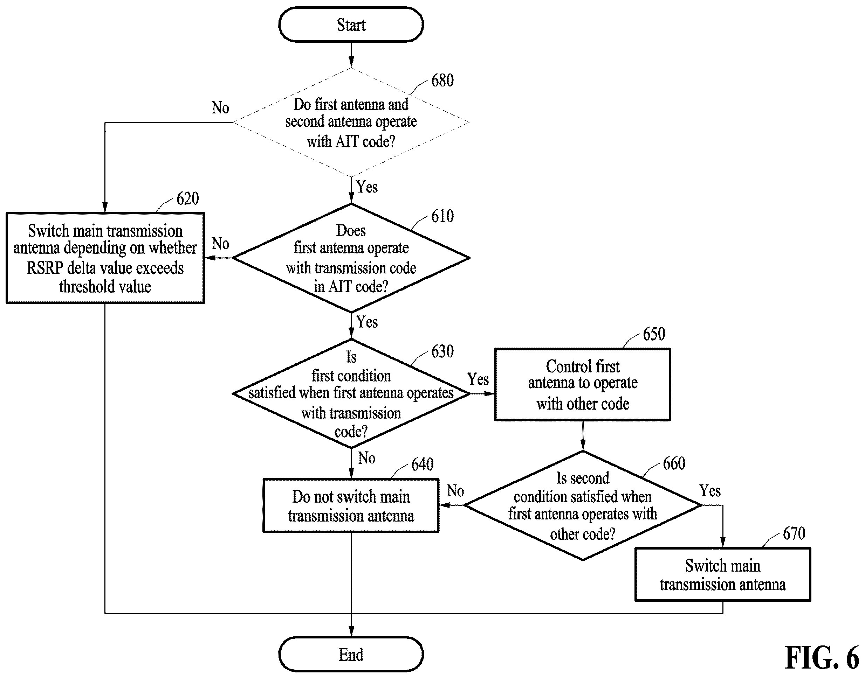

FIG. 6 is a flowchart illustrating a method of switching antennas of an electronic device, according to an embodiment of the disclosure.

In the following embodiments, operations may be performed sequentially but not necessarily. For example, the order of the operations may be changed and at least two of the operations may be performed in parallel. The operations shown in FIG. 6 may be performed by at least one component of an electronic device.

In operation 610, an electronic device (e.g., the electronic device 101 of FIG. 1 and the electronic device 200 of FIG. 2) may determine whether a first antenna (e.g., the first antenna 210 of FIG. 2 and the first antenna 510 of FIG. 5) operates with TX code in AIT code. The pieces of AIT code may include the TX code that controls the transmission performance of the first antenna by controlling the impedance of the first antenna. The pieces of AIT code may include RX code that controls the reception performance of a second antenna by controlling the impedance of the second antenna.

As described above with reference to FIG. 4, the deterioration of reception quality may occur compared to the actual performance of the first antenna when the first antenna operates with the TX code.

In operation 620, the electronic device may switch a main transmission antenna depending on whether an RSRP delta value exceeds a threshold value. In operation 620, the first antenna may operate with the RX code in the AIT code. As described above with reference to case 3 and case 4 of FIG. 4, when the first antenna operates with the RX code, the deterioration of reception quality may not occur compared to the actual performance of the first antenna. Accordingly, when the first antenna operates with the RX code, the main transmission antenna may be switched by only determining whether the RSRP delta value exceeds the threshold value.

In operation 630, the electronic device may determine whether a first condition is satisfied when the first antenna operates with the TX code. The first condition may be a condition for the reception quality of the first antenna and a second antenna (e.g., the second antenna 220 of FIG. 2 and the second antenna 520 of FIG. 5). The first condition may be whether an RSRP delta value for the first antenna and the second antenna exceeds the threshold value when the first antenna operates with the TX code. The RSRP delta value may be a value obtained by subtracting an RSRP value of the main transmission antenna from an RSRP value of a main reception antenna when the first antenna operates with the TX code.

In operation 640, the electronic device may not switch the main transmission antenna when the first condition is not satisfied. Even though the first antenna operates with the TX code, the main transmission antenna may not be switched because the RSRP delta value does not exceed the threshold value.

In operation 650, the electronic device may control the first antenna to operate with other code in the AIT code for a threshold time. When the threshold time elapses, the electronic device may control the first antenna to operate with the TX code again.

In operation 660, the threshold time may be a time for measuring an RSRP value of the first antenna and the second antenna to identify a second condition. Accordingly, the threshold time may be a relatively short time for measuring only the RSRP value of the first antenna and the second antenna. For example, the threshold time may be an instantaneous time when the RSRP value of the first antenna and the second antenna may be measured without affecting the performance of all antennas. However, the threshold time described above is only an example, and the disclosure is not limited thereto.

Other code may include the RX code and switching code. The switching code may be code used to verify whether it is reasonable to switch the main transmission antenna. The electronic device may control the first antenna to operate with the RX code. Alternatively, the electronic device may control the first antenna to operate with the switching code.

As the first antenna operates with the TX code, the deterioration of reception quality may occur compared to the actual performance of the first antenna, so the first condition may be satisfied, in operation 630. Accordingly, before switching the main transmission antenna, it may be necessary to identify whether the switching is necessary due to a decrease in the actual reception quality of the first antenna. Regardless of whether the first antenna operates with the TX code, the electronic device may control the first antenna to operate with other code to identify whether a condition is satisfied.

In operation 660, the electronic device may determine whether the second condition is satisfied when the first antenna operates with other code.

The electronic device may determine whether the second condition is satisfied when the first antenna operates with the RX code. The electronic device may determine whether the second condition is satisfied when the first antenna operates with the switching code.

The second condition may be a condition for the reception quality of the first antenna and the second antenna. The second condition may be whether the RSRP delta value for the first antenna and the second antenna exceeds the threshold value when the first antenna operates with other code. Here, the threshold value may be the same as the threshold value of operation 630. In operation 660, the RSRP delta value may be a value obtained by subtracting the RSRP value of the main transmission antenna from the RSRP value of the main reception antenna when the first antenna operates with other code. To distinguish the RSRP delta value in the first condition from the RSRP delta value in the second condition, the RSRP delta value in the first condition from the RSRP delta value in the second condition may be referred to as a first RSRP delta value and a second RSRP delta value, respectively.

Operation 640 may be performed when the second condition is not satisfied when the first antenna operates with other code. The electronic device may not switch the main transmission antenna when the second condition is not satisfied when the first antenna operates with other code. The electronic device may maintain an existing transmission path. That is, when at least one of the first condition and the second condition is not satisfied, the electronic device may not switch the main transmission antenna. When at least one of the first condition and the second condition is not satisfied and the first antenna is operating as the main transmission antenna, the electronic device may control the first antenna to continue operating as the main transmission antenna. When at least one of the first condition and the second condition is not satisfied and the second antenna is operating as the main transmission antenna, the electronic device may control the second antenna to continue operating as the main transmission antenna.

Operation 670 may be performed when the second condition is satisfied when the first antenna operates with other code. In operation 670, the electronic device may switch the main transmission antenna. The electronic device may change the existing transmission path by switching the main transmission antenna. That is, when both the first condition and the second condition are satisfied and the first antenna is operating as the main transmission antenna, the electronic device may switch the main transmission antenna from the first antenna to the second antenna. When both the first condition and the second condition are satisfied and the second antenna is operating as the main transmission antenna, the electronic device may control the second antenna to continue operating as the main transmission antenna. Compared to operation 630, in operations 650 and 660, the electronic device may calculate the RSRP delta value using the RSRP value measured instantaneously.

According to an embodiment, the electronic device may further perform operation 680 before operation 610. In operation 680, the electronic device may determine whether the TX code and the RX code for the first antenna and the second antenna are distinguished from each other. The TX code and the RX code may be distinguished from each other as pieces of code for different frequency bands. The electronic device may perform operations 610 to 670 when the TX code and the RX code are distinguished from each other. The electronic device may perform operation 620 when the TX code and the RX code are not distinguished from each other.

Hereinafter, a switching log of the main transmission antenna when the switching of the main transmission antenna is verified using other code is described.

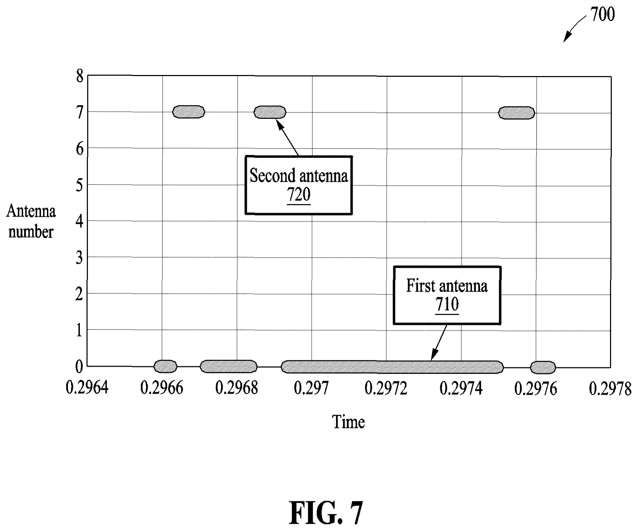

FIG. 7 is a diagram illustrating a switching log of a main transmission antenna, according to an embodiment of the disclosure.

FIG. 7 illustrates a table showing the switching log of the main transmission antenna.

Referring to FIG. 7, table 700 shows that antenna number 0 may be a first antenna 710 (e.g., the first antenna 210 of FIG. 2 and the first antenna 510 of FIG. 5). In the table 700, antenna number 7 may be a second antenna 720 (e.g., the second antenna 220 of FIG. 2 and the second antenna 520 of FIG. 5).

Referring to the table 700, most of the occupancy of the main transmission antenna may be the first antenna 710 compared to the table 500 of FIG. 5. This may be because, when switching the main transmission antenna, an electronic device (e.g., the electronic device 101 of FIG. 1 and the electronic device 200 of FIG. 2) additionally identifies whether a second condition is satisfied when the first antenna 710 operates with other code. By additionally identifying whether the second condition is satisfied, the electronic device may verify whether a first condition is satisfied due to the deterioration of reception quality when the first antenna 710 operates with TX code. That is, the electronic device may verify whether the first condition is satisfied due to additional deviation occurring when the first antenna 710 operates with the TX code by additionally identifying whether the second condition is satisfied.

As a result, the electronic device may prevent unnecessary switching of the main transmission antenna by switching the main transmission antenna when the first condition and the second condition are satisfied with an AND condition. The electronic device may prevent the main transmission antenna from being maintained as the second antenna 720 even though there is no gain.

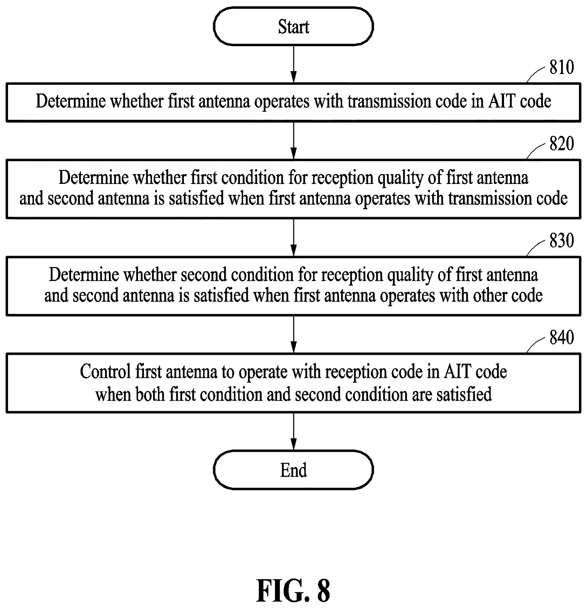

FIG. 8 is a flowchart illustrating an operating method of an electronic device according to an embodiment of the disclosure.

In the following embodiments, operations may be performed sequentially but not necessarily. For example, the order of the operations may be changed and at least two of the operations may be performed in parallel. The operations shown in FIG. 8 may be performed by at least one component of an electronic device (e.g., the electronic device 101 of FIG. 1 and the electronic device 200 of FIG. 2).

Referring to FIG. 8, in operation 810, an electronic device may determine whether a first antenna (e.g., the first antenna 210 of FIG. 2, the first antenna 510 of FIG. 5, and the first antenna 710 of FIG. 7) operates with TX code in AIT code.

In operation 820, the electronic device may determine whether a first condition for reception quality of the first antenna and a second antenna (e.g., the second antenna 220 of FIG. 2, the second antenna 520 of FIG. 5, and the second antenna 720 of FIG. 7) is satisfied when the first antenna operates with the TX code.

In operation 830, the electronic device may determine whether a second condition for the reception quality of the first antenna and the second antenna is satisfied when the first antenna operates with other code.

In operation 840, the electronic device may control the first antenna to operate with RX code in the AIT code when both the first condition and the second condition are satisfied.

The descriptions provided with reference to FIGS. 1 to 7 may apply to the operations provided with reference to FIG. 8, and thus, a detailed description thereof is omitted.

According to an embodiment, the determining of whether the first condition is satisfied may include determining whether a first RSRP delta value for the first antenna and the second antenna exceeds a threshold value when the first antenna operates with the TX code.

According to an embodiment, the determining of whether the second condition is satisfied may include determining whether a second RSRP delta value for the first antenna and the second antenna exceeds the threshold value when the first antenna operates with other code.

According to an embodiment, the controlling of the second antenna to operate as a main transmission antenna may include switching the main transmission antenna from the first antenna to the second antenna when both the first condition and the second condition are satisfied and the first antenna is operating as the main transmission antenna.

According to an embodiment, the controlling of the second antenna to operate as the main transmission antenna may include controlling the second antenna to continue operating as the main transmission antenna when both the first condition and the second condition are satisfied and the second antenna is operating as the main transmission antenna.

According to an embodiment, the controlling of the first antenna to operate with the RX code in the AIT code may include switching a main reception antenna from the second antenna to the first antenna when the main transmission antenna is switched from the first antenna to the second antenna.

According to an embodiment, the controlling of the first antenna to operate with the RX code in the AIT code may include controlling the first antenna to continue operating as the main transmission antenna when at least one of the first condition and the second condition is not satisfied and the first antenna is operating as the main transmission antenna.

According to an embodiment, the controlling of the first antenna to operate with the RX code in the AIT code may include controlling the second antenna to continue operating as the main transmission antenna when at least one of the first condition and the second condition is not satisfied and the second antenna is operating as the main transmission antenna.

According to an embodiment, the pieces of AIT code may include the TX code that controls the transmission performance of the first antenna by controlling the impedance of the first antenna and the RX code that controls the reception performance of the first antenna by controlling the impedance of the first antenna.

According to an embodiment, the pieces of AIT code may further include switching code that verifies whether it is reasonable to switch the main transmission antenna from the first antenna to the second antenna. According to an embodiment, other code may include the switching code and the RX code.

According to an embodiment, the second antenna may operate as the main reception antenna when the first antenna operates as the main transmission antenna. According to an embodiment, the second antenna may operate as the main transmission antenna when the first antenna operates as the main reception antenna.

According to an embodiment, the first RSRP delta value and the second RSRP delta value may be values obtained by subtracting an RSRP value of the main transmission antenna of the first antenna and the second antenna from an RSRP value of the main reception antenna of the first antenna and the second antenna.

According to an embodiment, the electronic device may further include determining whether the TX code and the RX code for the first antenna and the second antenna are distinguished from each other.

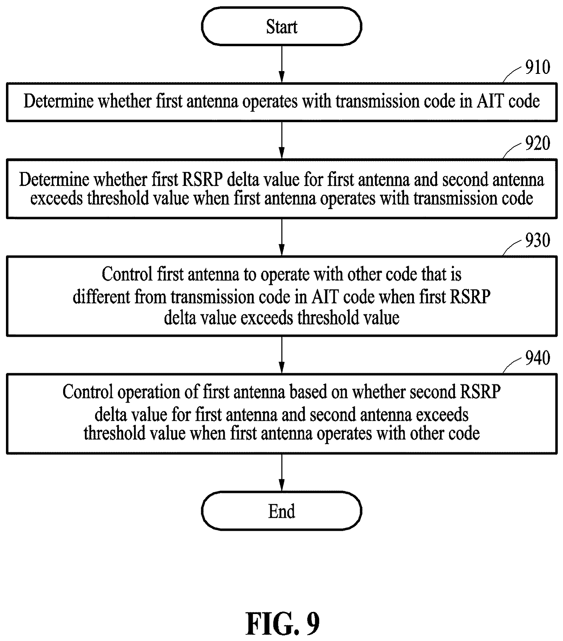

FIG. 9 is a flowchart illustrating an operating method of an electronic device according to an embodiment of the disclosure.

In the following embodiments, operations may be performed sequentially but not necessarily. For example, the order of the operations may be changed and at least two of the operations may be performed in parallel. The operations shown in FIG. 9 may be performed by at least one component of an electronic device (e.g., the electronic device 101 of FIG. 1 and the electronic device 200 of FIG. 2).

Referring to FIG. 9, in operation 910, the electronic device may determine whether a first antenna (e.g., the first antenna 210 of FIG. 2, the first antenna 510 of FIG. 5, and the first antenna 710 of FIG. 7) operates with TX code in AIT code.

In operation 920, the electronic device may determine whether a first RSRP delta value for the first antenna and a second antenna (e.g., the second antenna 220 of FIG. 2, the second antenna 520 of FIG. 5, and the second antenna 720 of FIG. 7) exceeds a threshold value when the first antenna operates with the TX code.

In operation 930, the electronic device may control the first antenna to operate with other code that is different from the TX code in the AIT code when the first RSRP delta value exceeds the threshold value.

In operation 940, the electronic device may control the operation of the first antenna based on whether a second RSRP delta value for the first antenna and the second antenna exceeds the threshold value when the first antenna operates with other code.

According to an embodiment, the first antenna is disposed in a lower area of the electronic device and the second antenna is be disposed in an upper area of the electronic device. The one or more processors is disposed in a middle area of the electronic device between the lower area and the upper area. The one or more processors are communicatively coupled to the first antenna and the second antenna via a radio frequency integrated circuit (RFIC).

According to an embodiment, when the first antenna is determined to be the main transmission antenna, the first antenna operates as a sub-reception antenna while operating as the main transmission antenna. When the second antenna is determined to be the main reception antenna, the second antenna operates as a sub-transmission antenna while operating as the main reception antenna.

According to an embodiment, one or more non-transitory computer-readable storage media storing one or more computer programs including computer-executable instructions that, when executed by one or more processors of an electronic device individually or collectively, cause the electronic device to perform determining, by the electronic device, whether a first antenna operates with transmission (TX) code in antenna impedance tuning (AIT) code. The computer-executable instructions that, when executed by one or more processors of an electronic device individually or collectively, cause the electronic device to perform determining, by the electronic device, whether a first condition for reception quality of the first antenna and a second antenna is satisfied while the first antenna operates with the TX code. The computer-executable instructions that, when executed by one or more processors of an electronic device individually or collectively, cause the electronic device to perform determining, by the electronic device, whether a second condition for the reception quality of the first antenna and the second antenna is satisfied while the first antenna operates with other code. The computer-executable instructions that, when executed by one or more processors of an electronic device individually or collectively, cause the electronic device to perform controlling, by the electronic device, the second antenna to operate as a main transmission antenna while both the first condition and the second condition are satisfied.

According to an embodiment, the determining of whether the first condition is satisfied comprises determining, by the electronic device, whether a first reference signal received power (RSRP) delta value for the first antenna and the second antenna exceeds a threshold value while the first antenna operates with the TX code.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device individually or collectively, cause the electronic device to perform a method of the disclosure.

Any such software may be stored in the form of volatile or non-volatile storage such as, for example, a storage device like read only memory (ROM), whether erasable or rewritable or not, or in the form of memory such as, for example, random access memory (RAM), memory chips, device or integrated circuits or on an optically or magnetically readable medium such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device (101, 200) comprising:
a first antenna (210, 510, 710);
a second antenna (220, 520, 720);
memory (130) storing one or more computer programs; and
one or more processors (120, 123, 230) communicatively coupled to the first antenna (210, 510, 710), the second antenna (220, 520, 720), and the memory (130),
wherein the one or more computer programs include computer-executable instructions that, when executed by the one or more processors (120, 123, 230) individually or collectively, cause the electronic device (101, 200) to:
determine whether the first antenna (210, 510, 710) operates with transmission (TX) code in antenna impedance tuning (AIT) code,
determine whether a first condition for reception quality of the first antenna (210, 510, 710) and the second antenna (220, 520, 720) is satisfied when the first antenna (210, 510, 710) operates with the TX code,
determine whether a second condition for the reception quality of the first antenna (210, 510, 710) and the second antenna (220, 520, 720) is satisfied when the first antenna (210, 510, 710) operates with other code that is different from the TX code in the AIT code, and
control the second antenna (220, 520, 720) to operate as a main transmission antenna when both the first condition and the second condition are satisfied.

2. The electronic device (101, 200) of claim 1, wherein the first condition is whether a first reference signal received power (RSRP) delta value for the first antenna (210, 510, 710) and the second antenna (220, 520, 720) exceeds a threshold value when the first antenna (210, 510, 710) operates with the TX code.

3. The electronic device (101, 200) of claims 1 to 2, wherein the second condition is whether a second RSRP delta value for the first antenna (210, 510, 710) and the second antenna (220, 520, 720) exceeds the threshold value when the first antenna (210, 510, 710) operates with the other code.

4. The electronic device (101, 200) of claims 1 to 3, wherein the one or more computer programs further include computer-executable instructions that, when executed by the one or more processors (120, 123, 230) individually or collectively, cause the electronic device (101, 200) to:
switch the main transmission antenna from the first antenna (210, 510, 710) to the second antenna (220, 520, 720) when both the first condition and the second condition are satisfied and the first antenna (210, 510, 710) is operating as the main transmission antenna, and
control the second antenna (220, 520, 720) to continue operating as the main transmission antenna when both the first condition and the second condition are satisfied and the second antenna (220, 520, 720) is operating as the main transmission antenna.

5. The electronic device (101, 200) of claims 1 to 4, wherein the one or more computer programs further include computer-executable instructions that, when executed by the one or more processors (120, 123, 230) individually or collectively, cause the electronic device (101, 200) to:
switch a main reception antenna from the second antenna (220, 520, 720) to the first antenna (210, 510, 710) when the main transmission antenna is switched from the first antenna (210, 510, 710) to the second antenna (220, 520, 720).

6. The electronic device (101, 200) of claims 1 to 5, wherein the one or more computer programs further include computer-executable instructions that, when executed by the one or more processors (120, 123, 230) individually or collectively, cause the electronic device (101, 200) to:
control the first antenna (210, 510, 710) to continue operating as the main transmission antenna when at least one of the first condition or the second condition is not satisfied and the first antenna (210, 510, 710) is operating as the main transmission antenna, and
control the second antenna (220, 520, 720) to continue operating as the main transmission antenna when at least one of the first condition or the second condition is not satisfied and the second antenna (220, 520, 720) is operating as the main transmission antenna.

7. The electronic device (101, 200) of claims 1 to 6, wherein pieces of the AIT code comprise the TX code that controls transmission performance of the first antenna (210, 510, 710) by controlling impedance of the first antenna (210, 510, 710) and reception (RX) code that controls reception performance of the first antenna (210, 510, 710) by controlling the impedance of the first antenna (210, 510, 710).

8. The electronic device (101, 200) of claims 1 to 7,
wherein the pieces of the AIT code further comprise switching code that verifies whether it is reasonable to switch the main transmission antenna from the first antenna (210, 510, 710) to the second antenna (220, 520, 720), and
wherein the other code comprises the switching code and the RX code.

9. The electronic device (101, 200) of claims 1 to 8,
wherein the second antenna (220, 520, 720) operates as the main reception antenna when the first antenna (210, 510, 710) operates as the main transmission antenna, and
wherein the second antenna (220, 520, 720) operates as the main transmission antenna when the first antenna (210, 510, 710) operates as the main reception antenna.

10. The electronic device (101, 200) of claims 1 to 9, wherein the first RSRP delta value and the second RSRP delta value are values obtained by subtracting an RSRP value of the main transmission antenna among the first antenna (210, 510, 710) and the second antenna (220, 520, 720) from an RSRP value of a main reception antenna among the first antenna (210, 510, 710) and the second antenna (220, 520, 720).

11. The electronic device (101, 200) of claims 1 to 10, wherein the one or more computer programs further include computer-executable instructions that, when executed by the one or more processors (120, 123, 230) individually or collectively, cause the electronic device (101, 200) to:
determine whether the TX code and the RX code for the first antenna (210, 510, 710) and the second antenna (220, 520, 720) are distinguished from each other.

12. An operating method performed by an electronic device (101, 200), the operating method comprising:
determining, by the electronic device (101, 200), whether a first antenna (210, 510, 710) operates with transmission (TX) code in antenna impedance tuning (AIT) code;
determining, by the electronic device (101, 200), whether a first condition for reception quality of the first antenna (210, 510, 710) and a second antenna (220, 520, 720) is satisfied while the first antenna (210, 510, 710) operates with the TX code;
determining, by the electronic device (101, 200), whether a second condition for the reception quality of the first antenna (210, 510, 710) and the second antenna (220, 520, 720) is satisfied while the first antenna (210, 510, 710) operates with other code; and
controlling, by the electronic device (101, 200), the second antenna (220, 520, 720) to operate as a main transmission antenna while both the first condition and the second condition are satisfied.

13. The operating method of claim 12, wherein the determining of whether the first condition is satisfied comprises determining, by the electronic device (101, 200), whether a first reference signal received power (RSRP) delta value for the first antenna (210, 510, 710) and the second antenna (220, 520, 720) exceeds a threshold value while the first antenna (210, 510, 710) operates with the TX code.

14. The operating method of claims 12 to 13, wherein the determining of whether the second condition is satisfied comprises determining, by the electronic device (101, 200), whether a second RSRP delta value for the first antenna (210, 510, 710) and the second antenna (220, 520, 720) exceeds the threshold value while the first antenna (210, 510, 710) operates with the other code.

15. The operating method of claims 12 to 14, wherein the controlling of the second antenna (220, 520, 720) to operate as the main transmission antenna comprises:
based on both the first condition and the second condition being satisfied and the first antenna (210, 510, 710) operating as the main transmission antenna, switching, by the electronic device (101, 200), the main transmission antenna from the first antenna (210, 510, 710) to the second antenna (220, 520, 720); and
based on both the first condition and the second condition being satisfied and the second antenna (220, 520, 720) operating as the main transmission antenna, controlling, by the electronic device (101, 200), the second antenna (220, 520, 720) to continue operating as the main transmission antenna.
